(19)

Europäisches
Patentamt
European
Patent Office
Office européen
des brevets

(11)     **EP 1 750 885 B1**

(12)                     **EUROPEAN PATENT SPECIFICATION**

(45) Date of publication and mention
of the grant of the patent:
**08.12.2010  Bulletin 2010/49**

(51) Int Cl.:
**B23K 9/073** (2006.01)

(21) Application number: **05759925.0**

(86) International application number:
**PCT/IB2005/002240**

(22) Date of filing: **17.05.2005**

(87) International publication number:
**WO 2005/115081 (08.12.2005 Gazette 2005/49)**

(54) **REGULATING METHOD, APPARATUS AND SOFTWARE FOR GAS METAL ARC WELDING WITH CONTINUOUSLY FED ELECTRODE**

VERFAHREN, VORRICHTUNG UND SOFTWARE ZUM REGELN DES GASMETALL-LICHTBOGENSCHWEISSENS MIT EINER KONTINUIERLICH ZUGEFÜHRTEN ELEKTRODE

METHODE DE REGULATION, APPAREIL ET LOGICIEL DE SOUDAGE A L'ARC SOUS GAZ, A ALIMENTATION CONTINUE EN FIL ELECTRODE

(84) Designated Contracting States:
**AT BE BG CH CY CZ DE DK EE ES FI FR GB GR HU IE IS IT LI LT LU MC NL PL PT RO SE SI SK TR**

(30) Priority: **14.05.2004  SE 0401252**

(43) Date of publication of application:
**14.02.2007  Bulletin 2007/07**

(73) Proprietor: **Esab AB**
**402 77 Göteborg (SE)**

(72) Inventors:
• **ÅBERG, Per**
  **S-695 30 Laxå (SE)**
• **PILKVIST, Andreas**
  **S-532 30 Skara (SE)**

(74) Representative: **Wihlsson, Joakim Per Magnus**
**Bjerkéns Patentbyra KB**
**Östermalmsgatan 58**
**114 50 Stockholm (SE)**

(56) References cited:
**EP-A1- 0 387 223     EP-A2- 1 036 627**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to a method of regulating the process of gas metal arc welding with continuously fed electrode, a weld current source and, in addition, a software for implementing the method according to the preamble of, respectively, claims 1, 6 and 7 (see, for example EP 0 387 223).

### Background art

In arc welding with mechanized feed of continuous welding wire, where the weld current flows through the welding wire, the main task of the welding process regulator is to keep the length of the arc constant when there is a varying distance between the welding torch and the workpiece. Nowadays, pulsed welding is often used of the kind where the welding process regulator also has the task of generating a sequence of pulses where each pulse is intended to detach a droplet from the welding electrode. An example of a regulating method for such a weld current source is described in EP 0 387 223.

The weld voltage is used as a measurement of the length of the arc, which is often measured as the voltage at the contact tube, that is immediately before the point where the weld current is transferred to the welding electrode.

In automated welding, there are difficulties in welding around internal and external corners. The torch angle must be changed in order to maintain as constant an angle as possible to the workpiece. For reasons of access, this is not always possible, which leads to the distance from the torch to the workpiece often being changed during such operations. This usually leads to a number of welding process parameters having to be changed, often in several stages, when welding is to be carried out around corners. This can be a time-consuming process during the programming phase.

In the same way, the welding of corners makes great demands on the welder's skill and attention in the case of manual welding.

### Disclosure of invention

An object of the invention is to provide a solution to the problem of adjusting welding parameters in the event of varying distance between the welding torch and the welded joint when using currently-available arc length regulating MIG/MAG machines, for example for short-pulse welding. The varying distance can, for example, be caused by access problems, such as when welding corners, going over tack welds, etc. The invention is defined in the method according to claim 1, the weld current source according to claim 6 and the software according to claim 7. Advantageous embodiments of the invention are defined in the subsidiary claims.

By means of the invention, it is possible to regulate the length of the arc more precisely, compared with currently available technology, as this utilizes the measurable weld voltage to represent the length of the arc, while the invention utilizes for the same purpose a corrected value of the weld voltage measured while welding is in progress.

It is advantageous to base the calculation on the electrode stick-out being divided up into segments and to calculate a voltage drop for each of these on the basis of the current that flowed through each segment in a particular position on the way from the contact tube to the arc. The resistivity in the electrode segment is temperature-dependent in such a way that it increases with temperature. Therefore the voltage drop in each segment will be greater the nearer the segment is located to the arc, if the segments are of equal length.

### Brief description of drawings

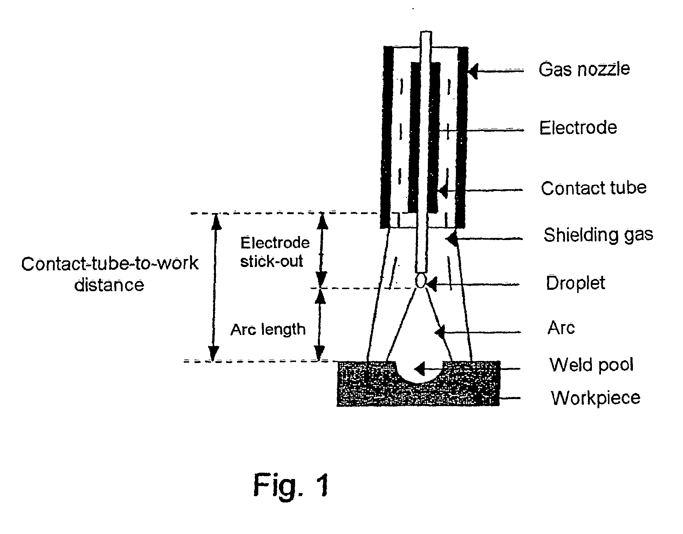

Figure 1 and Figure 2 define common terms in connection with the proximity of the electrode to the arc.

Figure 3 shows a simple block diagram of a welding regulating system.

Figure 4 shows the temperature-dependence of the resistivity for two different steel electrodes.

Figure 5 shows the voltage distribution in the arc. The arc voltage $U_b = U_a + U_p + U_k$. Large voltage drops in relation to the length occur in the anode and cathode areas.

Figure 6 shows the arc voltage as a function of the weld current for different arc lengths.

Figure 7 shows the arc length as a function of the time in the event of an increase in the distance between the contact tube and the workpiece (the contact-tube-to-work distance). Ka = 100% and Ki = 20% for regulation dependent upon voltage across both the electrode stick-out and the arc, that is according to known technology.

Figure 8 is as Figure 7, but with regulation dependent upon only the arc voltage, that is according to the invention.

Figures 9 and 10 are as Figures 7 and 8, but with Ka = 1000% and Ki = 10%.

Figure 11. Possible embodiment of the invention.

Figure 12. Possible regulating principle for short pulsing. The broken line shows how the current is changed in the event of a reduction in the background time Tb. Ib is increased in order to keep Tb * Ib constant.

Figure 13 illustrates variables for resistive heating of the electrode stick-out, that is the welding wire between the contact tube, where current is applied to the welding wire, and the arc.

Figure 14 illustrates the problem that is solved by the invention. In the event of varying distance between the workpiece and the contact tube, with the known regulating method Umeasurement1 = Umeasurement2 = Umeasurement 3. In order to achieve this, the arc voltages Ub are different, and accordingly the arc length also varies.

## Modes for carrying out the invention

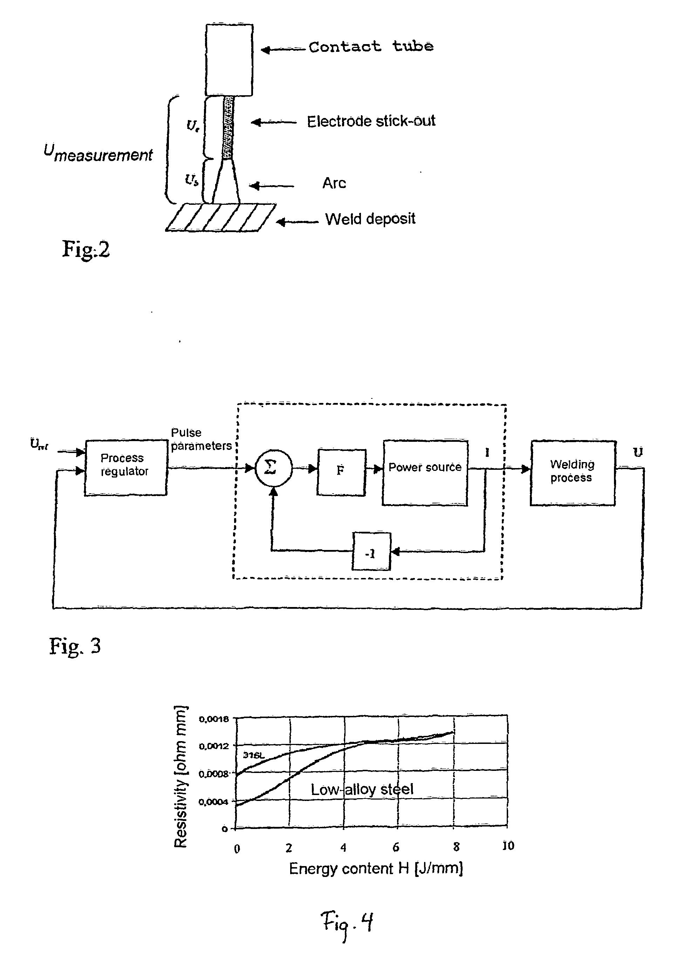

The inner regulation loop according to Figure 3 only ensures that the required current is supplied to the welding process. This regulation is so good, that in the following it will be regarded as the ideal, that is the current that the process regulator requires is supplied to the welding process.

The regulating system has thus been reduced to the welding process and a regulator. At first sight, this is a simple single-variable system with the weld current as the input signal and the weld voltage as the output signal. In addition, the system is to be found in commercial welding machines which shows that it works satisfactorily. There are, however, some characteristics that are not desirable and some that make it more difficult to analyse the system.

The output signal (the voltage) is measured simply between the contact tube and the weld deposit and it is this value that the regulator receives and according to which the regulator regulates, according to known technology. Actually, however, it is the length of the arc or the arc voltage that is to be regulated but, as it is not possible to measure the length of the arc, except by the use of a high-speed camera, instead the voltage is taken as a measurement of the length of the arc. As long as the distance between the contact tube and the weld deposit has small variations, this does not result in any major problem. $U_{measurement}$ can then be regulated satisfactorily and $U_b$ and $U_e$ can be kept constant.

If the regulator parameters are adjusted so that $U_{measurement}$ is kept constant and regulated rapidly, there are however unwanted effects in the welding.

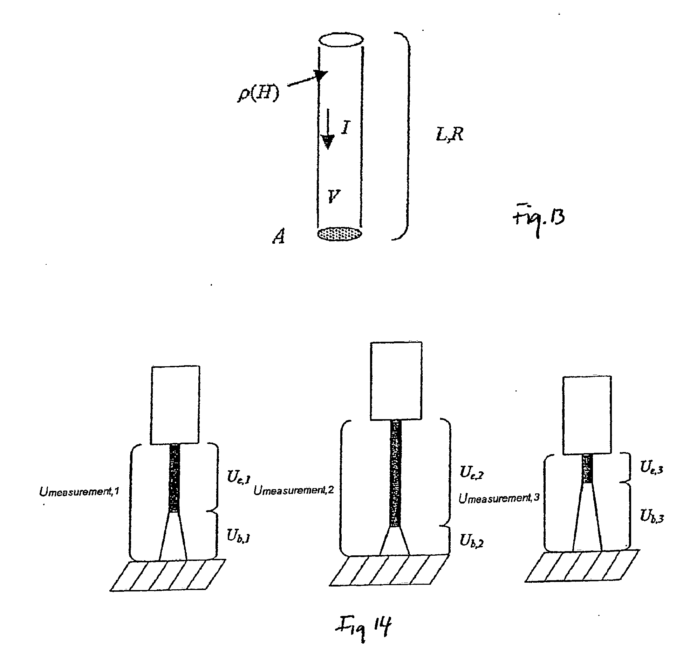

When, for example, the contact-tube-to-work distance increases, there is an increase in $U_{measurement}$ and, in order to reduce $U_{measurement}$ again, the pulse frequency is reduced and the electrode stick-out becomes longer and the arc becomes shorter. As the drop in voltage per unit length is less across the electrode than across the arc, $U_{measurement}$ is reduced, but as a result it produces a shorter arc. The reverse takes place in the event of a reduction in the contact-tube-to-work distance and a longer arc is obtained. Figure 14.

In order to avoid problems with changes of contact-tube-to-work distance, the regulator's parameters are setting parameters, where $K_a$ and $K_i$ stand for the proportional and integration regulator parameter respectively. By reducing the value of these, a slightly less effective regulator is obtained which does not keep the voltage completely constant. The system behaves more smoothly but, as far as regulation is concerned, it is less even.

The electrode is provided with heating energy from two sources, from the arc and from the resistive heating that takes place when current flows through the electrode.

All electrical conductors through which current flows are heated up due to the resistive power. This also takes place in the welding electrode and contributes to the electrode melting. Different materials have different resistivity (Figure 4) and the resistive heating is therefore different for different materials. Aluminium, which has a low resistivity, is not heated up as much as, for example, stainless steel which has a considerably higher resistivity. The thickness of the wire is also of great significance, as a thin conductor has a greater resistance than a thick one. For a welding electrode, some additional factors must be included in the calculation. The resistivity is dependent upon temperature (see Figure 4) and also upon the fact that cold electrode is being fed forward all the time. Consider an electrode element: The element is considered to be at room temperature when it leaves the contact tube and then it is gradually heated up as it moves downward. At the same time, the resistivity therefore increases and the resistive power in the element is therefore greater nearer to the end of the electrode.

Basic physical relationships are expressed in the formulae (0.1) and (0.2). In these p is the resistivity, L is the length of the conductor, A is the cross-sectional area of the conductor, V is the volume, R is the resistance, I is the current and P is the power. The temperature dependence is expressed in the following as a dependency on energy content designated H with the unit $J/mm^3$. The energy content increase per unit of time is power divided by volume and (0.1) combined with (0.2) gives (0.3). Figure 13 shows variables and designations for resistive heating.

$$R(H) = \frac{\rho(H) \cdot L}{A} \quad [Ohm] \tag{0.1}$$

$$P = R(H) \cdot I^2 \quad [J/s] \tag{0.2}$$

$$\frac{dH}{dt} = \frac{P}{V} = \frac{\rho(H) \cdot L}{A \cdot V} \cdot I^2 = \frac{\rho(H) \cdot L}{A \cdot L \cdot A} \cdot I^2 = \frac{\rho(H)}{A^2} \cdot I^2 \tag{0.3}$$

A model of the heating by the arc can be made very complicated. The idea is, however, to try to make a simple model and to express the most basic relationships.

The arc consists of plasma. Plasma is a strongly radiating and electrically conductive gaseous compound consisting of free electrons, ions and molecules. The arc can be divided into three areas: the cathode area, the anode area and the arc column. In the cathode area, electrons are released from the negative cathode and, in the anode area, the electrons are transferred to the positive anode.

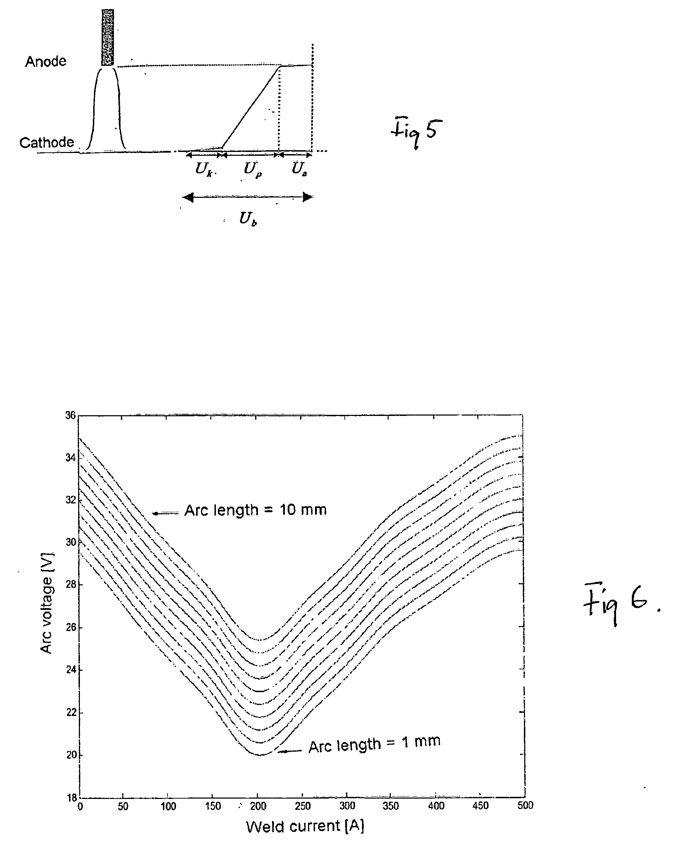

The arc column is the area between the anode and cathode areas. The voltage drops in the anode and cathode areas are large in relation to their length and they usually amount to 2/3 of the arc voltage, see Figure 5. $U_a$ is the anode voltage drop, $U_k$ is the cathode voltage drop and $U_p$ is the voltage drop across the arc column. The total of these contributions gives the arc voltage $U_b$. What happens in the anode area is relevant to the rate of melting.

Figure 5 describes the voltage distribution in the arc. The arc voltage $U_b = U_a + U_p + U_k$. Large voltage drops in relation to the size take place in the anode and cathode areas.

In many previous works, the heating of the electrode by the arc is considered to take place principally at the anode area and arises on account of the electrons that incide on the anode. Radiation heat is discounted and a heat balance is drawn up only for the tip of the electrode.

$$P_{anod} = \left( U_a + \frac{3}{2}\frac{kT}{e} + \frac{\phi_e}{e} \right) \cdot I \tag{0.4}$$

The power contribution consists of three different parts:

1. Kinetic energy in the electrons. Arises when the electrons pass through the electrical field that is associated with the anode voltage drop $U_a$. The power is represented by the first term in (0.4).

2. The second term in (0.4) represents the thermal energy in the electrons which is transferred to the anode. T is the temperature of the electrons, $k$ is Boltzmann's constant and $e$ is the electron charge.

3. The third and last term arises due to the potential energy that is released when the electrons are united with the anode's atoms. $\Phi_e$ is the metal's work function and indicates how much energy is required to release one electron from a metal surface. $\Phi_e$ is given in the units eV and the energy per charge or volt is obtained by dividing by the electron charge e.

The three terms vary little with the current, and (0.4) can therefore be written as:

$$P_{anod} = \phi \cdot I \qquad (0.5)$$

Φ is thus a measurement of the degree of heating of the electrode by the arc, and in the following will be called the constant anode heating potential. An important observation is that the equation (0.5) does not directly contain any terms for how different shielding gases affect the heat contribution from the arc. Different shielding gases produce different temperatures in the arc which means that the thermal energy in the inciding electrons will be different for different gases. It is considered here that this effect can be discounted and that therefore different shielding gases do not significantly affect the rate of melting.

Figure 4 illustrates the energy content dependence of the resistivity for carbon steel and stainless steel.

The element model includes quite a large number of parameters, some completely material-specific parameters and also parameters that are common to different materials. Material-specific parameters are:

- Constant heat content in detached droplet
- Constant anode heating potential
- Initial resistive energy content
- The material's resistivity at room temperature

Other parameters are set according to which welding case is to be simulated and, in addition, include completely material-specific parameters that need to be adjusted. The other parameters are:

- Electrode feed rate
- Contact-tube-to-work distance
- Initial arc length
- Time steps in the simulation
- Element length
- Number of elements that are affected by the anode heating

Measurement data from the International Institute of Welding 1984, The Physics of Welding, Pergamon Press, is used to calculate the voltage across the arc. The voltage as a function of current and arc length is measured and a spline function is adapted to the measurement values that can be used directly for simulations. It should be added that this measurement data is the only data that is available for MIG/MAG welding and that in the measurements a steel electrode is used and the shielding gas is argon with 2% oxygen. The measurement values must also be used with care. It is considered to be impossible to measure the arc voltage directly and instead the voltage has been measured from the contact tube to the workpiece. A calculated electrode voltage is then deducted from the measurement result in order to obtain the arc voltage. The model of the arc voltage can be used for simulations, but it is necessary to be aware of the uncertainty in the measurements that are used as the basis for the model.

Figure 6 describes the arc voltage as a function of the weld current for different arc lengths. The graphs are generated by the function that calculates the arc voltage in the regulation implementation.

### The process regulator

The regulator regulates the background time and background current. When the welding is stable, the regulator acts as a PI regulator. In the event of any shorting or in the event of an extinguished arc, however, special regulation algorithms cut in and restart the welding and control the process until it is stable again. In order to limit the work, only the PI regulator is implemented and the algorithm for this consists of the equations (0.6), (0.7), (0.8) and (0.9). There is also a block diagram for the total implementation in Figure 3.

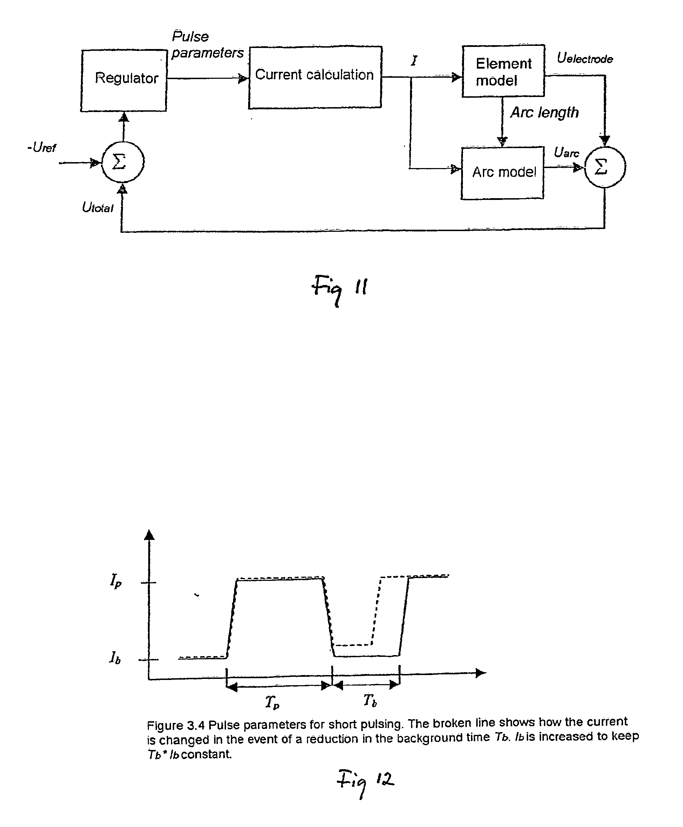

Figure 11 shows a block diagram of the element model connected to the regulator, current calculation and calculation of the arc voltage.

The background time $t_b$ is regulated around a preset value $t_{b,nom}$ and TP and TI are the proportional part and the integration part respectively.

$$t_b = t_{b,nom} + TP - TI \qquad (0.6)$$

*TP* and *TI* are calculated according to the equations (0.7) and (0.8), where $K_a$ and $K_i$ are the regulator parameters and $U_{Diff}$ is the difference between the total voltage and the reference voltage.

$$TP = K_a \cdot t_{b,nom} \cdot U_{Diff} \qquad (0.7)$$

$$TI = TI - K_j \cdot t_b \cdot U_{Diff} \qquad (0.8)$$

$$U_{Diff} = U_{tot} - U_{ref} \qquad (0.9)$$

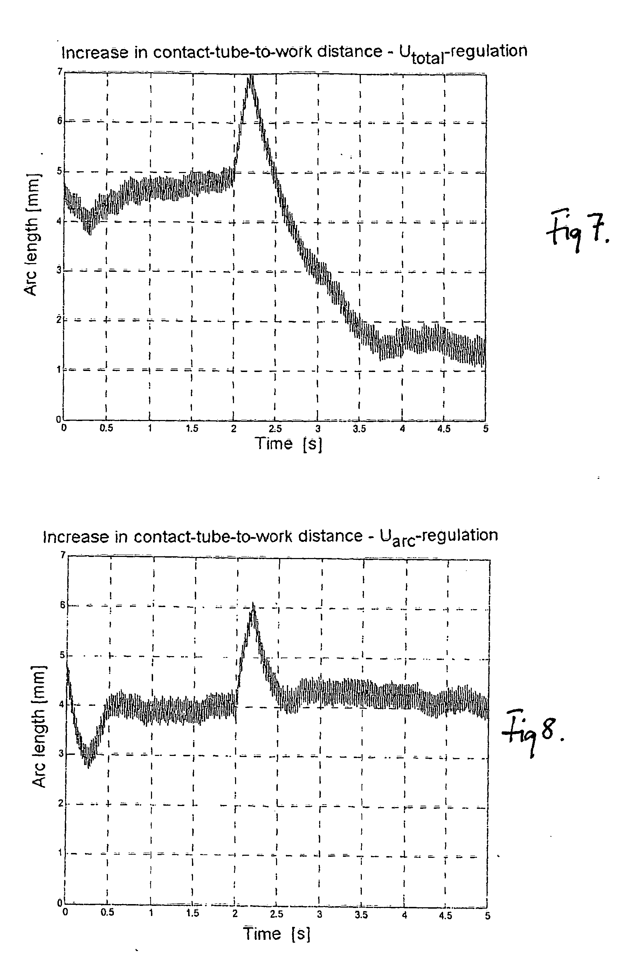

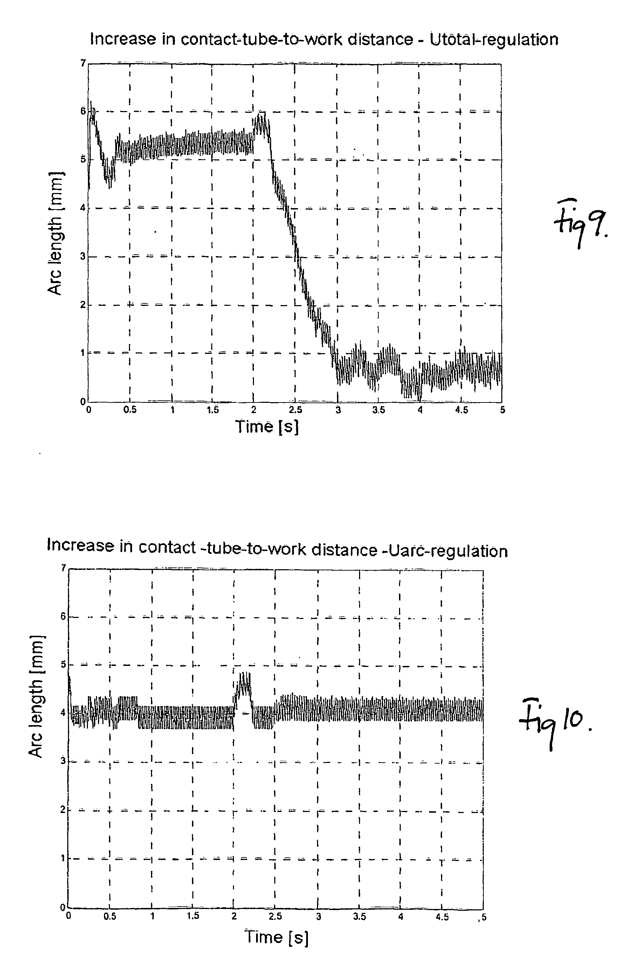

The background current $I_b$ is then calculated in such a way that the product of $I_b$ and $t_b$ is kept constant. When $K_a$ and $K_i$ are increased, the function of the regulation is impaired. The arc length is reduced as the contact-tube-to-work distance increases, which would appear to be unnatural. Figure 7. This applies for known regulation, while regulation using the arc voltage as the regulation parameter is improved considerably when $K_a$ and $K_i$ are increased. (Figures 8 and 10). In order to obtain rapid-response regulation with the new regulator, the currently-allowed maximum value of $K_a$ must be increased by approximately ten times. For manual welding this is not really desirable. Rapid-response regulation means that the pulse frequency is continuously changing. The sound from the welding process will also change at the same rate, which can mean that the welding process appears to be unstable. In a robot application, there is, however, scope for more rapid regulation. The contact-tube-to-work distance can be kept almost constant by a robot, which argues against the need for more rapid regulation. When welding, the robot can, however, come to a corner or curve in the workpiece. The contact-tube-to-work distance can then need to be increased in order for there to be room for the welding torch and more rapid and more precise regulation is desirable. There is a similar need when going over a tack weld.

The invention is not limited to the embodiments described above, but can also comprise other embodiments within the framework of the appended patent claims.

## Claims

1. Method of regulating a welding process of gas metal arc welding with a continuously fed welding electrode comprising the arc length being represented by an arc voltage and with the melting power supplied to the electrode being regulated in response to said arc voltage in that the melting power increases in the event of a reduction in arc voltage and reduces in the event of an increase in arc voltage, **characterized in that** during the regulation process the arc voltage is calculated dynamically by a weld voltage, principally representing a difference in potential between a contact tube and a weld deposit, being corrected for a dynamically calculated voltage drop across the welding electrode through which the current is passing, in its extent from the outlet end of the contact tube to the end of the arc that adjoins the electrode, taking into account the value of the weld current during the passage of the welding electrode from contact tube to arc, and also taking into account the heating of the electrode and the temperature dependence of the electrode resistivity.

2. Method according to Claim 1, in which the said extent of the welding electrode is divided up into at least two segments and the voltage drop is calculated dynamically for each segment and the weld voltage is corrected for the sum of the voltage drop of the segments for calculating the arc voltage.

3. Method according to any one of the preceding Claims, comprising pulsing of the weld current with the aim of essentially detaching one droplet of the electrode per pulse.

4. Method according to any one of the preceding Claims, comprising, in addition, correction of the arc voltage for a voltage drop in the transition from electrode end to arc, normally called the anode voltage drop.

5. Method according to Claim 4, in which the effect of the anode voltage drop on the heating of the end of the electrode is calculated for at least the electrode segment that is closest to the arc.

6. Weld current source comprising means for regulating a welding process involving gas metal arc welding with a continuously fed welding electrode, wherein the arc length is represented by an arc voltage and means for regulating the melting power supplied to the electrode in response to said arc voltage with increase of the melting power in the event of a reduction in arc voltage and with reduction of the melting power in the event of an increase in arc voltage, **characterized in** comprising means for, during the regulation process, calculating the arc voltage dynamically by a weld voltage, principally representing a difference in potential between a contact tube and a weld deposit, being corrected for a dynamically calculated voltage drop across the welding electrode through which the current is passing, in its extent from the outlet end of the contact tube to the end of the arc that adjoins the electrode, taking into account the value of the weld current during the passage of the welding electrode from contact tube to arc, and also taking into account the heating of the electrode and the temperature dependence of the electrode resistivity.

7. Computer software for carrying out the welding process regulating method according to any one of Claims 1 - 5, when loaded into a welding machine.

**Patentansprüche**

1. Verfahren zum Regulieren eines Schweißprozesses von Lichtbogen-Schutzgasschweißen mit einer kontinuierlich gespeisten Schweißelektrode aufweisend, dass die Bogenlänge repräsentiert wird durch eine Bogenspannung und reguliert wird durch die Schmelzleistung bereitgestellt an die Elektrode in Reaktion auf die Bogenspannung, wobei die Schmelzleistung erhöht wird falls eine Reduktion in der Bogenspannung vorliegt und gesenkt wird falls eine Erhöhung in der Bogenspannung vorliegt
**gekennzeichnet dadurch, dass**
während des Regulierungsprozesses, die Bogenspannung dynamisch berechnet wird über eine Schweißspannung, prinzipiell repräsentierend eine Differenz im Potential zwischen einer Kontaktröhre und einem Schweißgut, korrigiert für einen dynamisch berechneten Spannungsabfall über die Schweißelektrode, durch welche der Strom fließt, in ihrer Ausdehnung von dem Auslassende von dem Kontaktrohr zu dem Ende von dem Bogen der an die Elektrode anstößt, unter Berücksichtigung des Wertes des Schweißstromes während des Flusses durch die Schweißelektrode von der Kontaktröhre zum Bogen und auch unter Berücksichtigung der Aufheizung von der Elektrode und dem temperaturabhängigen Elektrodenwiderstand.

2. Verfahren gemäß Anspruch 1, wobei die Ausdehnung von der Schweißelektrode in zumindest zwei Segmente aufgeteilt ist und der Spannungsabfall dynamisch berechnet wird für jedes Segment und die Schweißspannung korrigiert wird für die Summe von dem Spannungsabfall von den Segmenten zum Berechnen der Bogenspannung.

3. Verfahren gemäß jeglichem der vorhergehenden Ansprüche, aufweisend Pulsieren des Schweißstromes mit dem Ziel im Wesentlichen einen Tropfen von der Elektrode per Puls abzulösen.

4. Verfahren gemäß jeglichem der vorhergehenden Ansprüche, zusätzlich aufweisend Korrektur von der Bogenspannung für einen Spannungsabfall in dem Übergang von dem Elektrodenende zu dem Bogen, normalerweise Anodenspannungsabfall genannt.

5. Verfahren gemäß Anspruch 4, wobei der Effekt von dem Anodenspannungsabfall an dem aufgeheizten Ende von der Elektrode berechnet wird für zumindest das Elektrodensegment, welches am nächsten an dem Bogen ist.

6. Schweißstromquelle aufweisend
Mittel zum Regulieren eines Schweißprozesses umfassend Lichtbogen-Schutzgasschweißen mit einer kontinuierlich gespeisten Schweißelektrode, wobei die Bogenlänge repräsentiert wird durch eine Bogenspannung und Mittel zum Regulieren der Schmelzleistung bereitgestellt an die Elektrode in Reaktion auf die Bogenspannung, mit Erhöhen der Schmelzleistung falls eine Reduktion in der Bogenspannung vorliegt und mit Senken der Schmelzleistung falls eine Erhöhung in der Bogenspannung vorliegt
**gekennzeichnet durch**
Mittel zum dynamischen Berechnen der Bogenspannung, während des Regulierungsprozesses, über eine Schweißspannung, prinzipiell repräsentierend eine Differenz im Potential zwischen einer Kontaktröhre und einem Schweißgut, korrigiert für einen dynamisch berechneten Spannungsabfall über die Schweißelektrode, **durch** welche der Strom fließt, in ihrer Ausdehnung von dem Auslassende von dem Kontaktrohr zu dem Ende von dem Bogen der an die Elektrode anstößt, unter Berücksichtigung des Wertes von dem Schweißstrom während des Flusses **durch** die Schweißelektrode von der Kontaktröhre zum Bogen und auch unter Berücksichtigung der Aufheizung von der Elektrode und dem temperaturabhängigen Elektrodenwiderstand.

**7.** Computer Software zum Ausführen des Schweißprozessregulierungsverfahrens gemäß einem der Ansprüche 1-5, wenn in eine Schweißmaschine eingespielt.

**Revendications**

**1.** Procédé de régulation d'un processus de soudure à l'arc d'un métal sous flux gazeux, avec une électrode de soudure à avance continue, la longueur de l'arc étant représentée par une tension d'arc et la puissance de fusion alimentée vers l'électrode étant régulée en réponse à ladite tension d'arc, la puissance de fusion augmentant lorsque la tension d'arc diminue et diminuant lorsque la tension d'arc augmente, **caractérisé en ce que**, pendant le processus de régulation, la tension d'arc est calculée dynamiquement par une tension de soudure, représentant principalement une différence de potentiel entre un tube de contact et un dépôt de soudure, corrigée pour une chute de tension calculée dynamiquement dans l'électrode de soudure à travers laquelle le courant passe, sur son extension de l'extrémité de sortie du tube de contact vers l'extrémité de l'arc adjacente à l'électrode, en tenant compte de la valeur du courant de soudure pendant le passage de l'électrode de soudure du tube de contact vers l'arc et en tenant également compte du chauffage de l'électrode et de la dépendance de la résistivité de l'électrode en fonction de la température.

**2.** Procédé selon la revendication 1, dans lequel ladite extension de l'électrode de soudure est divisée en au moins deux segments et la chute de tension est calculée dynamiquement pour chaque segment et la tension de soudure est corrigée de la somme de la chute de tension des segments pour calculer la tension d'arc.

**3.** Procédé selon l'une des revendications précédentes, comprenant l'application d'une impulsion de courant de soudure afin de détacher essentiellement une gouttelette de l'électrode à chaque impulsion.

**4.** Procédé selon l'une des revendications précédentes, comprenant, en outre, la correction de la tension d'arc avec une chute de tension dans la transition de l'extrémité de l'électrode vers l'arc, normalement appelée chute de tension d'anode.

**5.** Procédé selon la revendication 4, dans lequel l'effet de la chute de tension d'anode sur le chauffage de l'extrémité de l'électrode est calculé au moins pour le segment d'électrode qui est le plus proche de l'arc.

**6.** Source de courant de soudure comprenant des moyens permettant de réguler un processus de soudure impliquant une soudure à l'arc d'un métal sous flux gazeux avec une électrode à avance continue, dans laquelle la longueur de l'arc est représentée par une tension d'arc et des moyens de régulation de la puissance de fusion alimentée vers l'électrode en réponse à ladite tension d'arc, avec une augmentation de la puissance de fusion dans le cas d'une réduction de la tension d'arc et avec une réduction de la puissance de fusion dans le cas d'une augmentation de la tension d'arc, **caractérisé en ce qu'**il comprend des moyens permettant de calculer, pendant le processus de régulation, la tension d'arc dynamiquement par une tension de soudure, représentant principalement une différence de potentiel entre un tube de contact et un dépôt de soudure, corrigé pour une chute de tension calculée dynamiquement sur l'électrode de soudure à travers laquelle le courant passe, sur son extension de l'extrémité de sortie du tube de contact vers l'extrémité de l'arc adjacente à l'électrode, en tenant compte de la valeur du courant de soudure pendant le passage de l'électrode de soudure du tube de contact vers l'arc et en tenant également compte du chauffage de l'électrode et de la dépendance de la résistivité de l'électrode en fonction de la température.

**7.** Logiciel informatique permettant de réaliser le procédé de régulation du processus de soudure selon l'une des revendications 1 à 5 lorsqu'il est chargé dans une machine de soudure.

Fig. 1

Contact tube

Electrode stick-out

Arc

Weld deposit

$U_{measurement}$

$U_e$

$U_b$

Fig. 2

$U_{rel}$

Process regulator

Pulse parameters

$\Sigma$

F

Power source

I

Welding process

U

-1

Fig. 3

Resistivity [ohm mm]

0,0018

0,0012

0,0008

0,0004

0

316L

Low-alloy steel

0    2    4    6    8    10

Energy content H [J/mm]

Fig. 4

$U_k$    $U_p$    $U_a$

$U_b$

Fig 5

Arc length = 10 mm

Arc length = 1 mm

Fig 6.

Increase in contact-tube-to-work distance - $U_{total}$-regulation

Fig 7.

Increase in contact-tube-to-work distance - $U_{arc}$-regulation

Fig 8.

Increase in contact-tube-to-work distance - Utotal-regulation

fig 9.

Increase in contact -tube-to-work distance -Uarc-regulation

fig 10.

Fig 11

Figure 3.4 Pulse parameters for short pulsing. The broken line shows how the current is changed in the event of a reduction in the background time $T_b$. $I_b$ is increased to keep $T_b * I_b$ constant.

Fig 12

$\rho(H)$

$I$

$V$

$L,R$

$A$

Fig. 13

$U_{measurement,1}$    $U_{e,1}$

$U_{b,1}$

$U_{measurement,2}$    $U_{e,2}$

$U_{b,2}$

$U_{measurement,3}$    $U_{e,3}$

$U_{b,3}$

Fig 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0387223 A

**Non-patent literature cited in the description**

- **Welding.** The Physics of Welding. Pergamon Press, 1984